# EUROPEAN PATENT SPECIFICATION

(11) **EP 3 319 877 B1**
(45) Date of publication and mention of the grant of the patent: **06.11.2019**
(21) Application number: 16742499.3
(22) Date of filing: 07.07.2016
(51) Int. Cl.: G08C 17/02, B65B 13/02, B65B 13/22, B65B 13/18, G05B 19/042, H04W 4/80

(54) **TOOL SETTING MANAGEMENT SYSTEM AND METHOD**
SYSTEM UND VERFAHREN ZUR WERKZEUGEINSTELLUNGSVERWALTUNG
SYSTÈME ET PROCÉDÉ DE GESTION DE RÉGLAGE D'OUTIL

(30) Priority: 10.07.2015 US 201562191087 P; 05.05.2016 US 201615147425
(43) Date of publication of application: 16.05.2018
(73) Proprietor: Signode Industrial Group LLC, Glenview, IL 60026 (US)
(72) Inventor: SKONIECZNY, Wayne, J., Glenview, IL 60026 (US); BOSS, Walter, L., Glenview, IL 6002 (US); FIGIEL, Janusz, Glenview, IL 60026 (US); RAGUSA, Mark, Glenview, IL 60026 (US); LEINE, Guido, Simon, Glenview, IL 60026 (US)
(74) Representative: von Hirschhausen, Helge
(86) International application number: PCT/US2016/041216
(87) International publication number: WO 2017/011248

(56) References cited:
- WO-A1-2006/026870
- CN-U- 202 491 949
- DE-A1-102009 016 302
- US-A1- 2002 129 866
- US-A1- 2012 299 727
- US-A1- 2014 048 522
- US-A1- 2014 060 345
- US-B1- 7 299 103

## Description

### CROSS-REFERENCE TO RELATED APPLICATION

This application is related to commonly-owned co-pending U.S. Patent Application No. 15/ , (Atty. Docket No. 026787-0165/70079-US), which was filed on May 5, 2016, and is entitled "Tool and Tool Setting Management System and Method Configured to Pair with the Tool to Change How the Tool Can Function."

### BACKGROUND

A method for modifying a strap tensioning device setting of a strap tensioning device with the features in the prior art portion of claim 1 is disclosed in US 2012/ 299 727 A1. An example of a prior art strap tensioning device with the features of the prior art portion of claim 6 is disclosed in US 2002/129 866 A1.

Tools that have one or more different modifiable tool settings are well known. For instance, one known strap tensioning device is operable to tension a strap until the strap tension reaches a designated tension level (which is a tool setting of the strap tensioning device). This known strap tensioning device enables a user to modify this designated tension level if the user desires a higher or lower strap tension. For instance, the user may desire a strap having a width of 1/2 inch (13 millimeters) to have a different strap tension than a strap having a width of 3/4 inch (19 millimeters). In this case, the user would modify the tool setting to change the defined tension level when switching between using the strap tensioning device to tension 1/2 inch (13 millimeter) wide straps and 3/4 inch (19 millimeter) wide straps. The fact that these known tools have one or more modifiable tool settings renders these tools more valuable and flexible than their counterparts having non-modifiable tool settings because they can conform to different applications as needed.

Generally, before using a tool having modifiable tool settings, a user ensures the tool is appropriately configured for its intended use by, for each tool setting, confirming that the tool setting is set to the user's desired tool setting value or modifying the tool setting to the desired tool setting value. Continuing with the above example, if the user desires to use the known strap tensioning device to tension 3/4 inch (19 millimeter) wide straps, the user ensures that the tension level of the tool is set to the desired tension level for 3/4 inch (19 millimeter) wide straps.

Known tools having modifiable tool settings typically include one or more mechanical or electromechanical tool setting modification devices that are mounted to the tools' housings and that are directly physically manipulatable by a user to modify one or more tool settings. Put differently, to modify a tool setting of one of these known tools, the user must directly physically manipulate a tool setting modification device that is a physical part of the tool. The tool setting modification devices may take any of a variety of forms. For instance, mechanical tool setting modification devices can include knobs, levers, or dials, and electromechanical tool setting modification devices can include button panels or touch screen displays.

These known tool setting modification devices are problematic for a variety of reasons.

One problem with these known tool setting modification devices is that they render the tools more fragile and prone to breaking down, which increases down time and maintenance costs. Many tools having modifiable tool settings are used in an environment in which they are exposed to dirt, dust, debris, and moisture and in which the tools are frequently dropped, bumped, or otherwise impacted. Exposing a tool setting modification device of a tool to this harsh environment will inevitably lead to the tool setting modification device malfunctioning or outright failing. For example, while a metal or plastic housing of a tool may be able to withstand being dropped in a puddle or smashed by a wayward pallet or container of goods, a glass touch screen or an electromechanical button panel likely will not. A malfunctioning or broken tool setting modification device requires the tool to be removed from the work environment and either replaced or repaired. This wastes time and increases maintenance costs.

Another problem with these known tool setting modification devices is that they increase tool production costs. Every component added to a tool costs money in the form of additional materials, additional time to redesign the tool, and additional time to assemble the tool including the new component. Including a tool setting modification device in a tool thus adds material costs and introduces complexity to the tool, thereby increasing design costs and assembly costs. This is especially problematic for known electromechanical tool setting modification devices such as button panels and touch screens. These include expensive, specialized hardware components, such as circuit boards, controllers, and the like, and require complex assembly due to the myriad of electrical connections that must be made.

Another problem with these known tool setting modification devices is that they increase the weight of the tool. A tool including a tool setting modification device is thus comparatively heavier and more cumbersome to use than one without. This fatigues users more quickly, making them more likely to slow production or make mistakes.

Another problem with these known tool setting modification devices is that a user could accidentally adjust them, which could lead to accidental modification of the corresponding tool settings. This results in inconsistent and, in some instances, suboptimal tool performance. For example, a user may accidentally manipulate a tool setting modification device of a strap tensioning device to reduce the tension level setting. If the user does not realize that the tension level setting has been reduced and continues to tension straps, those straps will be tensioned to a tension level that does not provide the desired performance.

These problems are compounded when the tool includes multiple different tool settings that are modifiable using multiple different tool setting modification devices mounted to the tool. For instance, a tool having a mechanical dial for changing a first tool setting, a mechanical lever for changing a second tool setting, and an electromechanical button panel for changing a third tool setting is three times as likely to malfunction or break than a tool having a single tool setting modification device.

There is a continuing need for new ways to modify tool settings of a tool that solve the above problems.

### SUMMARY

The present disclosure is directed to a tool setting management system and method that solve the above problems by (1) providing a tool having a tool setting that a user cannot modify by directly physically manipulating any tool setting modification device of the tool and (2) enabling the user to modify the tool setting using a device wirelessly connected to the tool. Eliminating the physically manipulatable tool setting modification device of the tool increases tool durability and longevity; reduces maintenance costs, down time, and production costs; and makes the tool easier to use for extended periods.

Generally, the tool setting management system of the present disclosure enables a user to wirelessly pair a user device, such as a smartphone or a computer, with a tool, such as via a Bluetooth connection. The tool has at least one modifiable tool setting, but does not include any component that is physically manipulatable by the user to modify the tool setting. In various embodiments in which the tool has a power device (such as a button) configured to power the tool on and off, the tool does not include any component that is physically manipulatable by the user to modify the tool setting in addition to that power device. Once paired with the tool, the user device enables the user to input a tool setting modification, and sends the tool setting modification to the paired tool. Upon receipt of the tool setting modification from the user device, a controller of the paired tool modifies the appropriate stored tool setting in accordance with the received tool setting modification.

In various embodiments of the present disclosure, a method of modifying a strap tensioning device setting, of a strap tensioning device, comprises: pairing a user device and the strap tensioning device such that a wireless communication device of the user device and a wireless communication device of the strap tensioning device can communicate with one another over a network; receiving, by an input device of the user device, a modification to a strap tensioning device setting of the paired strap tensioning device; and communicating, by the wireless communication device of the user device, the modification of the strap tensioning device setting to the wireless communication device of the paired strap tensioning device to cause the paired strap tensioning device to change a strap tensioning device setting in accordance with the modification, wherein the strap tensioning device setting cannot be modified other than via receipt of the modification from the wireless communication device of the user device.

In one such embodiment, the strap tensioning device setting is a tension level setting.

In another such embodiment, the strap tensioning device is a handheld strap tensioning device.

In another such embodiment, the wireless communication devices of the user device and the strap tensioning device are Bluetooth devices.

In another such embodiment, the method further includes receiving, by the wireless communication device of the user device and from the wireless communication device of the paired strap tensioning device, strap tensioning device operating data.

In another such embodiment, the method further includes receiving, by the input device of the user device, a request to view the strap tensioning device operating data and displaying, by the display device of the user device, the strap tensioning device operating data in response to receiving the request.

In another such embodiment, the method further includes communicating, by the wireless communication device of the user device and to the wireless communication device of the paired strap tensioning device, a request for the strap tensioning device operating data.

Various embodiments of the present disclosure provide a strap tensioning device comprising: a body; a battery supported by the body; a tensioning motor supported by the body and powered by the battery; a tensioning wheel operably connected to the tensioning motor; a first wireless communication device pairable with a second wireless communication device of a user device such that the first wireless communication device can send data to and receive data from the second wireless communication device; and a controller including a memory device storing a strap tensioning device setting associated with a tension level, the controller configured to: (1) control the tensioning motor in accordance with the strap tensioning device setting to tension a strap until a strap tension of the strap reaches the tension level, and (2) after the first wireless communication device is paired with the second wireless communication device and the first wireless communication device receives a request to modify the tension level of the strap tensioning device setting from the second wireless communication device, modify the tension level, wherein the tension level cannot be modified other than via receipt of the request to modify from the second wireless communication device.

In another such embodiment, the strap tensioning device further includes power device actuatable to power the strap tensioning device on and off.

In another such embodiment, the strap tensioning device does not include any devices in addition to the power device that are physically manipulatable by a user to modify the tension level of the strap tensioning device.

In another such embodiment, the controller is configured to pair the first wireless communication device with the second wireless communication device upon receiving a pair request from the second wireless communication device.

In another such embodiment, the first and second wireless communication devices are Bluetooth devices.

In another such embodiment, the controller is configured to cause the first wireless communication device to send strap tensioning device operating data to the second wireless communication device.

In another such embodiment, the controller is configured to automatically cause the first wireless communication device to send the strap tensioning device operating data to the second wireless communication device after the first wireless communication device and the second wireless communication device are paired.

In another such embodiment, the controller is configured to cause the first wireless communication device to send the strap tensioning device operating data upon receiving a strap tensioning device operating data request from the second wireless communication device.

In another such embodiment, the strap tensioning device is a handheld strap tensioning device.

Additional features and advantages are described herein, and will be apparent from, the following Detailed Description and the Figures.

### BRIEF DESCRIPTION OF THE FIGURES

Figure 1 is a block diagram of one embodiment of the tool setting management system of the present disclosure including a user device and a tool configured to communicate over a wireless communication network.
Figure 2 is a perspective view of one embodiment of a tool of the tool setting management system of the present disclosure.
Figure 3 is another perspective view of the tool of Figure 2.
Figure 4 is another perspective view of the tool of Figure 2.
Figure 5 is another perspective view of the tool of Figure 2 similar to the view shown in Figure 3 with portions of the housing removed for clarity.
Figure 6 is an enlarged perspective view of the tool of Figure 2 showing various components and features of the tool.
Figure 7 is another perspective view of the tool of Figure 2 similar to the view shown in Figure 4 with portions of the housing removed for clarity.
Figure 8 is an illustration of the interlocking key arrangement formed in the overlapping courses of strap by the tool of Figure 2.
Figure 9 is an illustration of portions of the sealing and tensioning sections of the tool of Figure 2.
Figure 10 illustrates the positioning of the strap around a load.
Figures 11A and 11B are top plan and bottom plan views of an example circuit board of the tool of Figure 2.
Figure 12 is a flowchart of an example process or method of operating the tool of Figure 2.
Figures 13A and 13B are top plan views of one embodiment of a user device of the tool setting management system of the present disclosure during initialization of the tool setting management software application.
Figure 14 is a flowchart of an example process or method of pairing the user device and the tool via the tool setting management software application.
Figures 15A, 15B, 15C, 15D, 15E, and 15F are top plan views of the user device of Figures 13A and 13B during the pairing process of Figure 14.
Figures 16A, 16B, and 16C are block diagrams of the user device and a plurality of tools during the pairing process of Figure 14.
Figure 17 is a flowchart of an example process or method of modifying a tool setting of a tool paired with a user device via the tool management software application.
Figures 18A, 18B, 18C, and 18D are top plan views of the user device of Figures 13A and 13B during the tool setting modification process of Figure 17.
Figures 19A and 19B are top plan views of the user device of Figures 13A and 13B during a statistics viewing process.
Figures 20A and 20B are top plan views of the user device of Figures 13A and 13B during a diagnostics viewing process.

### DETAILED DESCRIPTION

The present disclosure is directed to a tool setting management system and method that solves the above problems by (1) providing a tool having a tool setting that a user cannot modify by directly physically manipulating any tool setting modification device of the tool and (2) enabling the user to modify the tool setting using a device wirelessly connected to the tool. Eliminating the physically manipulatable tool setting modification device of the tool increases tool durability and longevity; reduces maintenance costs, down time, and production costs; and makes the tool easier to use for extended periods.

Generally, the tool setting management system of the present disclosure enables a user to wirelessly pair a user device, such as a smartphone or a computer, with a tool, such as via a Bluetooth connection. The tool has at least one modifiable tool setting, but does not include any component that is physically manipulatable by the user to modify the tool setting. In various embodiments in which the tool has a power device (such as a button) configured to power the tool on and off, the tool does not include any component that is physically manipulatable by the user to modify the tool setting in addition to that power device. Once paired with the tool, the user device enables the user to input a tool setting modification, and sends the tool setting modification to the paired tool. Upon receipt of the tool setting modification from the user device, a controller of the paired tool modifies the appropriate stored tool setting in accordance with the received tool setting modification.

The management system of the present disclosure can be applied to any suitable machine, such as a strapping machine, or any suitable tool, such as a handheld strapping tool configured to cut, tension, seal, and/or otherwise apply steel or plastic straps. For clarity and brevity, any and all of these machines and tools are referred to herein as "tools."

### 1. Tool setting management system components

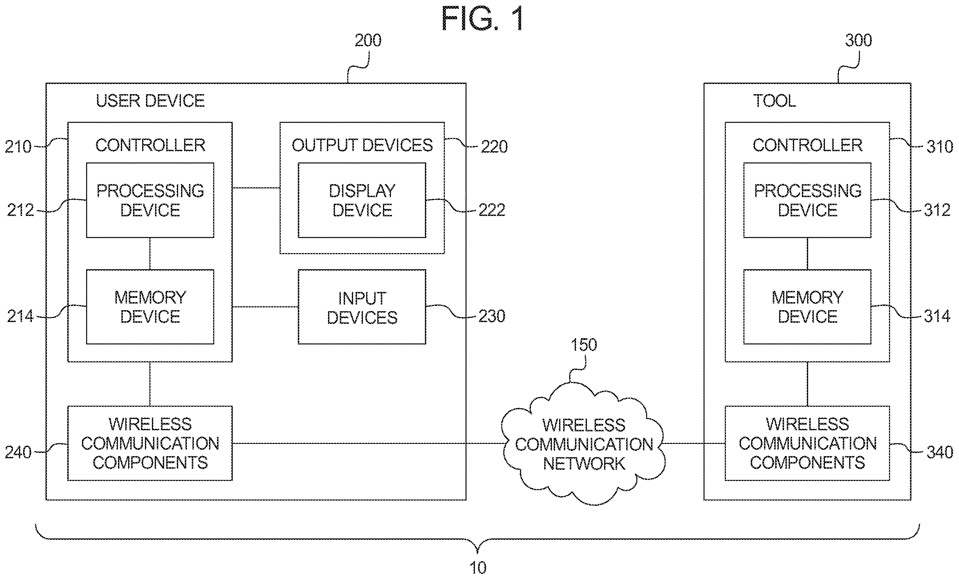

Figure 1 illustrates one example embodiment of the tool setting management system 10 of the present disclosure. In this embodiment, the tool setting management system 10 includes a user device 200 and a tool 300 configured to send data to and receive data from one another over a wireless communication network 150, such as a Bluetooth network, a WiFi network, a cellular network, or other suitable data network.

The user device 200 may be any suitable computing device including components configured to send data to and receive data from the tool 300 such as, but not limited to: a desktop computer, a laptop computer, a tablet computer, a personal digital assistant, or a smartphone. In various embodiments, the user device 200 includes: (1) a controller 210 that includes a processing device 212 and a memory device 214, (2) one or more output devices 220 in communication with the controller 210, (3) one or more input devices 230 in communication with the controller 210, and (4) one or more wireless communication components 240 in communication with the controller 210.

The processing device 212 may be any suitable processing device, such as a microprocessor, a microcontroller-based platform, a suitable integrated circuit, or one or more application-specific integrated circuits. The memory device 214 may be any suitable memory device, such as such as one or more volatile memory elements (e.g., random access memory (RAM, such as DRAM, SRAM, SDRAM, etc.)) and/or one or more nonvolatile memory elements (e.g., ROM, hard drive, tape, CDROM, etc.).

The one or more output devices 220 include at least one display device 222. The at least one display device may include, without limitation: a monitor, a plasma display, a liquid crystal display (LCD), a display based on light emitting diodes (LEDs), a display based on a plurality of organic light-emitting diodes (OLEDs), a display based on polymer light-emitting diodes (PLEDs), a display based on a plurality of surface-conduction electron-emitters (SEDs), a display including a projected and/ or reflected image, or any other suitable electronic device or display mechanism. The at least one display device 222 may be of any suitable size, shape, and configuration. In certain embodiments, the one or more output devices 220 include a sound generating device, such as one or more speakers.

The one or more input devices 230 may include any suitable device(s) that enables an input signal to be produced and received by the controller 210. In various embodiments, the one or more input devices 230 include a plurality of buttons that are programmable to, when actuated, cause the user device to perform particular functions. For instance, these buttons may be hard keys, programmable soft keys, or icons displayed on the display device 222 of the user device 200 that are actuatable via a touch screen of the user device 200 (described below) or via use of a suitable input device of the user device 200 (such as a mouse or a stylus).

In certain embodiments, the one or more input devices 230 include a touch-screen coupled to a touch-screen controller or other touch-sensitive display overlay to enable interaction with any images displayed on the display device. One such input device is a conventional touch-screen button panel.

The touch-screen and the touch-screen controller are connected to a video controller. In these embodiments, signals are input to the user device 200 by touching the touch screen at the appropriate locations.

The one or more wireless communication components 240 include one or more communication interfaces having different architectures and utilizing a variety of protocols such as, but not limited to: 802.11 (WiFi); 802.15 (including Bluetooth); 802.16 (WiMax); 802.22; cellular standards such as CDMA, CDMA2000, and WCDMA; Radio Frequency (eg., RFID); infrared; and Near Field Communication (NFC) protocols. The one or more wireless communication components 240 transmit electrical, electromagnetic, or optical signals that carry digital data streams or analog signals representing various types of information.

The controller 210 is configured to operate one or more separate programs. The separate programs comprise ordered listings of executable instructions for implementing logical functions. For example, the controller 210 may be configured to operate a suitable operating system such as, but not limited to: (1) a Windows operating system available from Microsoft Corporation; (2) a Macintosh operating system available from Apple Computer, Inc.; (3) a UNIX operating system, which is available for purchase from many vendors, such as the Hewlett-Packard Company, Sun Microsystems, Inc., and AT&T Corporation; (4) a LINUX operating system, which is freeware that is readily available on the Internet; (5) a run time Vxworks operating system from Intel, Inc.; or (6) an appliance-based operating system, such as that implemented in smartphones, tablet computers, and personal digital assistants (e.g., iOS available from Apple Computer, Windows Mobile available from Microsoft Corporation, and Android available from Google). The operating system essentially controls the execution of other programs, and provides scheduling, input-output control, file and data management, memory management, and communication control and related services.

The tool 300 may be any suitable tool including components configured to send data to and receive data from the user device 200. In various embodiments, the tool 300 includes: (1) a controller 310 that includes a processing device 312 (such as any of those described above) and a memory device 314 (such as any of those described above), and (2) one or more wireless communication components 340 (such as any of those described above) in communication with the controller 310.

### 2. Example tool

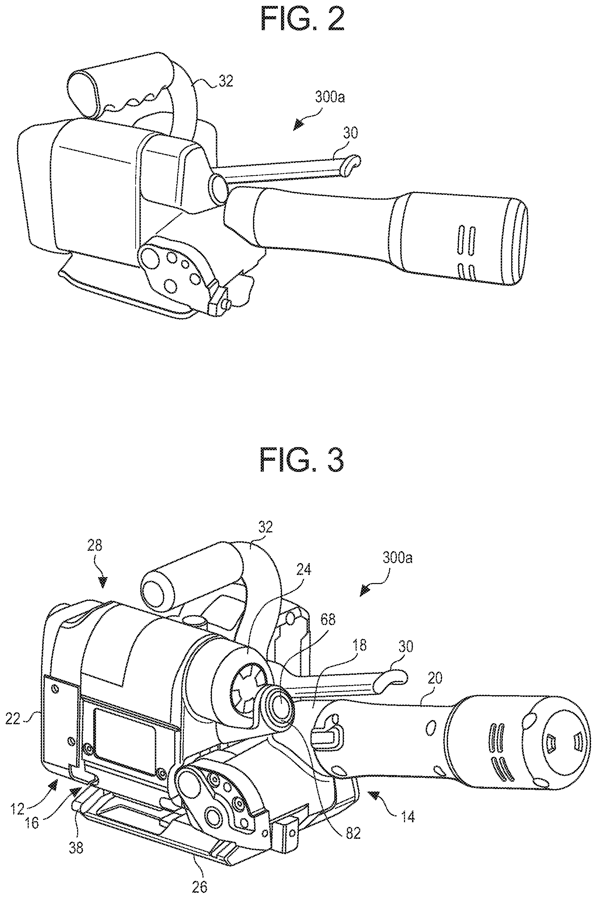

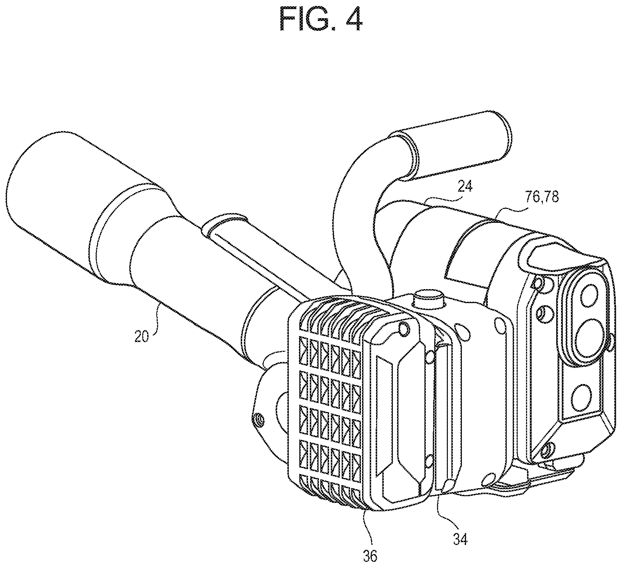

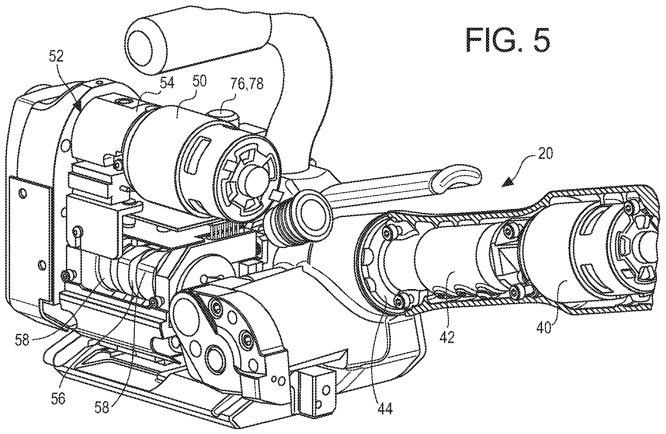

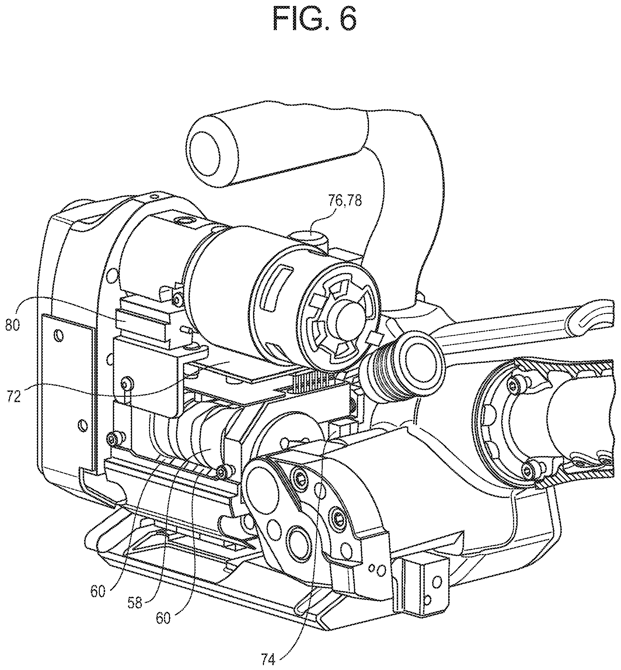

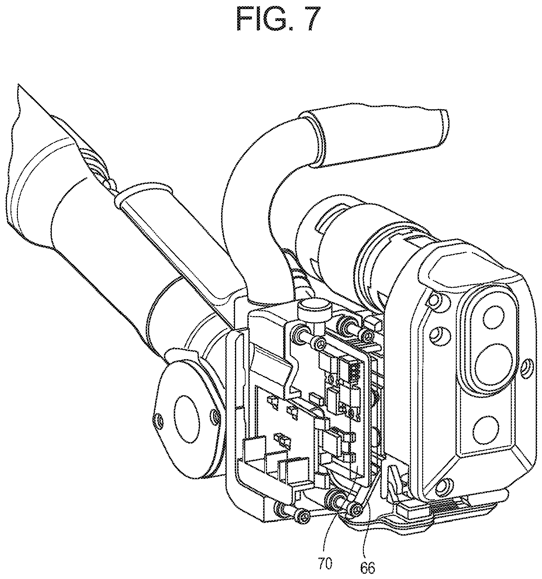

Figures 2, 3, 4, 5, 6, 7, 8, 9, 10, 11A, 11B, and 12 illustrate the components, features, and operation of one example embodiment of a tool 300a of the tool setting management system of the present disclosure.

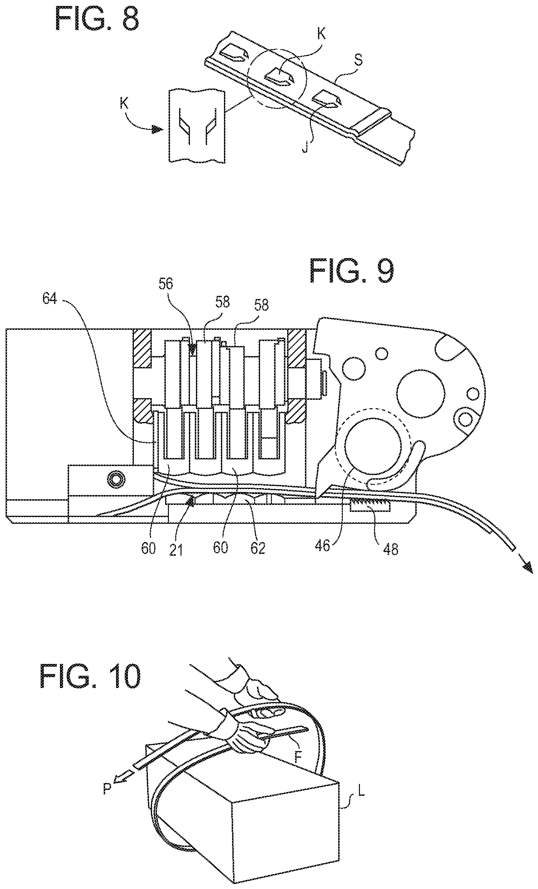

In this embodiment, the tool 300a is a steel strap tensioning, sealing, and cutting tool configured to, as best shown in Figures 8, 9, and 10, tension a steel strap S or strapping material around an object or load L, seal overlapping portions of the strap S to itself at a seal or joint J to form a tensioned loop around the load L, and cut the tensioned loop from the strap supply P. Generally, the strap S includes a feed or supply end P and a free end F that is fed around the load L and reinserted into the tool 300a to overlap the supply end P.

For purposes of the present disclosure, the term "sealless" refers to the configuration or type of seal or joint that is made in the overlapping portions of the strap. Although a "seal" is made in the strap courses, the sealless joint is made by cutting or punching interlocking keys K or sections of the courses, as illustrated in Figure 8. The term sealless is intended to define this type of joint or seal J as compared to a joint that is made using a separate element such as a crimp seal that is applied over and crimped onto the overlapping strap courses.

The tool 300a includes a body 12, a tensioning section 14, and a sealing section 16. The tensioning section 14 includes a housing 18 and a first or tensioner motor assembly 20 operably mounted to the body 12. The sealing section 16 includes a sealer 21, a housing 22, and a second or sealer motor assembly 24 operably mounted to the body 12. The body 12 includes a foot 26, a housing 28, and one or more handles 30 and 32 to facilitate handling and using the tool 300a. One handle can be a tool opening handle 30 above the tensioner motor assembly 20 and the other an operating handle 32 mounted above the body 12. A receiver 34 is formed as part of or mounted to the body 12 for receiving a battery 36 or other power source. A temporary hold-down finger 38 can be positioned on the foot 12, opposite the tensioner motor assembly 20. The hold-down finger can be biased toward the foot 26.

The tensioning section 14 includes the tensioner motor assembly 20, which has a motor 40, such as a DC motor, and a gear housing 42 including a gear set 44 to convert the motor 40 output drive to a usable speed. The gear set 44 can include a planetary gear set (not shown) to reduce the output speed and to increase the output power or torque from the motor 40. The gear set 44 includes a final drive (not shown) that meshes with a gear (not shown) on a tension wheel 46. The tension wheel 46 is mounted normal to the final drive. The gear set 44 and final drive are housed in the gear housing 18 mounted to the tool body 12. A gripping pad 48 can be positioned in the foot 26, opposite the tension wheel 46.

The tensioner motor assembly 20, gear housing 42, and tension wheel 46 are movably mounted to the body 12 to move the tension wheel 46 toward and away from the foot 26. This enables the tool 300a to be opened to position the strap S between the foot 26 and the tension wheel 46. In an embodiment, the tensioner motor assembly 20, gear housing 42, and tension wheel 46 are pivotably mounted to the body 12 to pivot the tension wheel 46 toward and away from the foot 26. The tensioner motor assembly 20, gear housing 42, and tension wheel 46 can be biasedly mounted to the body 12, such as by a spring (not shown), to bias the tension wheel 46 toward the foot 26 and into contact with the strap S in the closed position.

The sealing section 16 includes the sealer motor assembly 24 which has a motor 50 (such as a DC motor) and a drive 52. In one embodiment, the drive 52 is a gear set 54 that includes a planetary gear set (not shown) that drives a cam shaft 56 through a final drive gear (not shown). The planetary gear set reduces the output speed and increases the output power or torque from the motor 50. Other drives can be used to transfer power from the motor 50 to the cam shaft 56, such as belts, chains, and the like.

Cams 58 on the cam shaft 56 contact and move a set of dies 60 in the sealing section 16. The dies 60 reciprocate toward and away from a punch 62 located on the foot 26 to bring the dies 60 into and out of contact with the overlapping course of strap S positioned between the dies 60 and the punch 62. When the dies 60 engage the strap S (in a sealing portion of the cycle), the dies 60 and punch 62 form keys K in the strap S that, when shifted longitudinally, lock into one another. An example of a sealer section 16 is illustrated in Figure 9 and an example of an interlocking key K seal or joint J is illustrated in Figure 8. The sealing section 16 also includes a cutter 64 to cut the looped and sealed strap S from the strap supply P during the sealing cycle. Similar to the dies 60, the cutter 64 is driven by the rotation of the cam shaft 56.

The tool 300a is configured to permit operation in fully automatic and manual modes. To this end, the tool 300a includes a control system, shown generally at 66, to control operation of the tool 300a. In one embodiment, the tool 300a includes an actuation switch 68, the controller 310 (described above), and one or more circuits 70 and 72 to control the tensioner motor 40 and the sealing motor 50. In an embodiment, the tensioner motor and sealing motor circuits 70 and 72 are provided on separate boards within the tool 300a. In this embodiment, the controller 310 is a Bluetooth Low Energy (BLE) microcontroller that includes a Bluetooth radio. The BLE microcontroller 310 is configured to control both the operation of the tool 300a and its components and the Bluetooth radio to pair and communicate with one or more user devices, as described below.

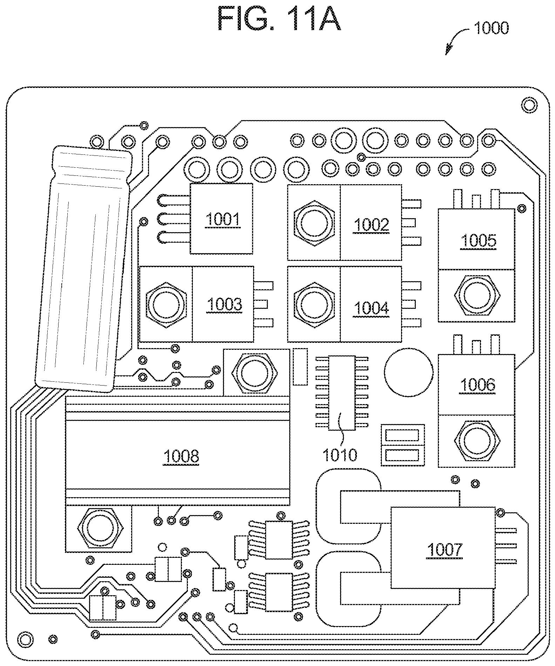

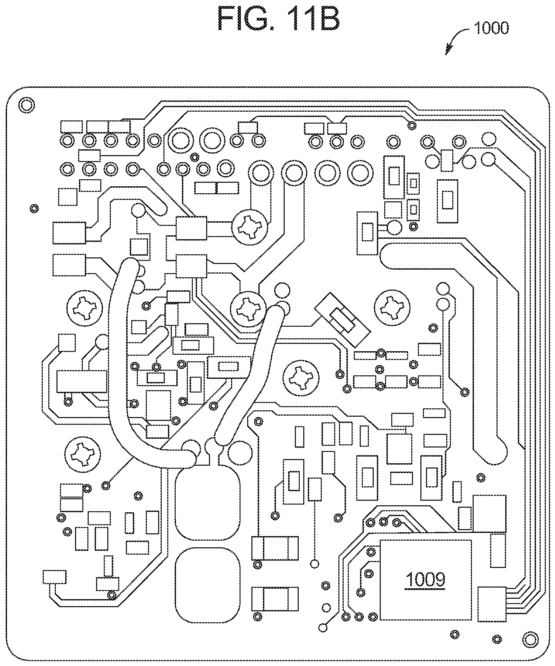

In other embodiments, the tool includes a single board including the controller, the tensioner circuit, and the sealer circuit. Figures 11A and 11B illustrate one such board 1000. The board 1000 includes: (1) a metal-oxide-semiconductor field-effect transistor (MOSFET) 1001 configured to activate the dynamic brake, (2) MOSFETs 1002 and 1006 configured to control the tensioner motor in a forward or first direction, (3) MOSFET 1003 configured to control the sealer motor in a forward or first direction, (4) MOSFETs 1004 and 1005 configured to control the tensioner motor in a reverse or second direction, (5) a current sensor 1007 configured to sense the current level in both the tensioner motor and the sealer motor, (6) a power resistor 1008 configured to slow down and stop sealer motor rotation, (7) an integrated circuit 1010 configured to control the tensioner motor, and (8) a BLE microcontroller 1009 communicatively connected to the MOSFETs 1001, 1002, 1003, 1004, 1005, 1006; the current sensor 1007; the power resistor 1008; and the integrated circuit 1010.

The BLE microcontroller 310 includes a memory device 314 as described above. The memory device 314 stores one or more different tool parameters or tool settings that the tool 300a employs or references during operation of the tool to control certain components of the tool. Specifically, in this example embodiment, the memory device of the tool 300a stores a strap tension level of a strap of a particular width. During operation, and as described below, the BLE microcontroller of the strap tensioning device controls the tensioner motor 40 such that the tool 300a tensions a strap of that width to the tension level associated with that width stored in the memory device 314. As described in detail below, the tool setting management system of the present disclosure enables a user to increase or decrease (i.e., modify) the tension level associated with that strap width stored in the memory device of the tool via the tool setting management software application.

In this embodiment, the tool 300a does not include any tool setting modification devices (in addition to the actuation switch 68) that are mounted to the tool's housing and that are directly physically manipulatable by a user to modify any tool settings stored by the memory device 314. Put differently, in this embodiment, the only way to modify any tool settings stored on the memory device 314 is by pairing the tool with a user device and modifying the tool setting(s) via the tool setting management software application, as described in detail below.

In other embodiments, for a particular tool setting stored in the memory device, the tool: (1) includes a tool setting modification device that is directly physically manipulatable by a user to modify that tool setting stored by the memory device, and (2) is pairable to a user device to enable the user to modify that tool setting via the tool setting management software application, as described in detail below. Thus, in these embodiments, the user has the option of modifying the tool setting via the paired user device or via physically manipulating the tool setting modification device on the tool itself.

In other embodiments in which a tool has a plurality of modifiable tool settings stored in the memory device, the tool includes one or more tool setting modification devices that are directly physically manipulatable by a user to modify some- but not all- of the plurality of tool settings. The remaining tool settings must be modified via the paired user device, and cannot be modified by physically manipulating any tool setting modification device on the tool itself. Thus, in these embodiments, certain tool settings must be modified via physically manipulating tool setting modification devices on the tool itself while other tool settings must be modified via the paired user device. In certain such embodiments, at least one tool setting that is modifiable via physically manipulating a tool setting modification device on the tool itself is also modifiable via the paired user device.

In this embodiment, during operation of the tool 300a, the controller 310 compiles and stores in the memory device 314 any of a variety of different data associated with operation of the tool 300a. In this embodiment, the controller 310 compiles and stores: the average operating time of the tensioner motor, the total quantity of tension/seal/cut cycles performed by the tool, the amount of battery life remaining, the average quantity of tension/ seal/ cut cycles performed by the tool per day, the serial number of the tool, the quantity of tension/ seal/ cut cycles remaining before the tensioning wheel should be replaced, and the quantity of tension/seal/cut cycles remaining before the punch and die components should be replaced. As described in detail below, once the tool 300a is paired with a user device, the tool is configured to send the stored data to the user device, which enables display of the operating data via the tool setting management software application.

The control system 66 can further include a cam position switch or sensor 74 to sense the position of the cam shaft 56 in the sealing section 16, a strap size adjustment device 76, an anti-jam device 78, and a dynamic brake 80. The cam position switch 74 is positioned to determine the position of the cam shaft 56 and thus the position of the cam lobes 58 (or cams), and consequently the dies 60 and cutter 64. The strap size adjustment device 76 can be, for example, a knob-type dial adjustment provided on the tool body 12. Control of the anti-jam device 78 can be incorporated within the tension/strap size adjustment dial 76. The dynamic brake 80 is associated with the sealing motor 50 to brake or stop the motor 50 when the cam shaft 56 is at a home position and to bleed power from the motor 50 at the completion of the sealing cycle. The tool 300a can further include one or more indicators, such as LEDs, to provide indication of certain functions and states of the tool. An LED indicator 82 can be positioned within or around the actuation switch 68.

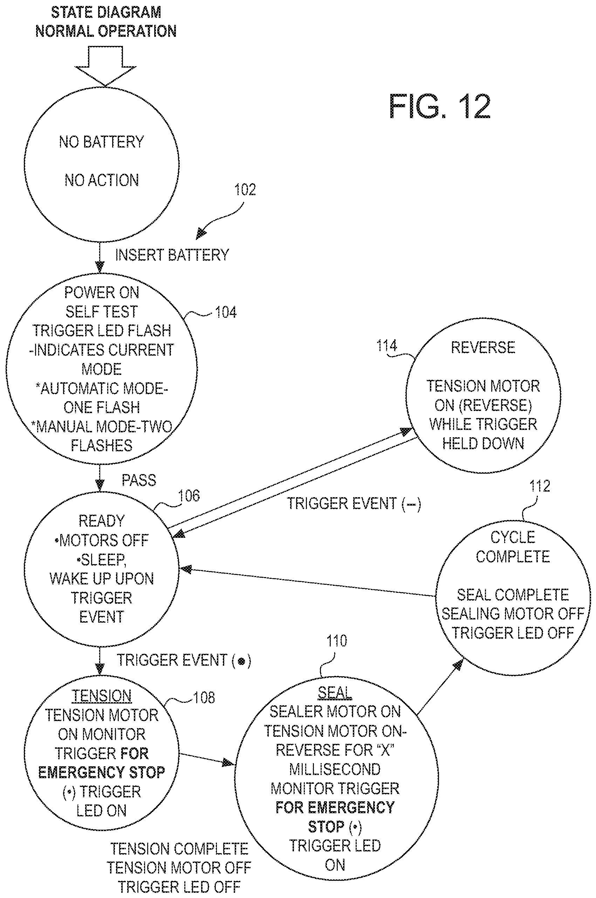

Referring to Figure 12, in an operating scenario, the tool 300a is in a home position in which the spring biases the tension wheel 46 into contact with the foot 26. When the battery is installed, as at step 102, the tool 300a turns on and runs a self-test, as at step 104. An indicator, such as the LED 84 in the actuation switch 68, can be configured to flash in a predetermined sequence to indicate the operating state of the tool 300a. For example, the LED 84 can flash once to indicate that the tool 300a is in an automatic operating mode and twice to indicate that the tool 300a is in a manual operating mode. Once the tool 300a completes the self-test it is in a ready/sleep state as at step 106. In the ready/sleep state, the tensioner and sealer motors 40 and 50 are off (no power to the motors), the tool 300a is ready for operation in an automatic mode or a manual mode, and the Bluetooth radio is listening for an inquiry broadcast by a user device.

To commence a strapping cycle, the tool 300a is opened by urging or pulling the tensioner motor assembly 20 toward the tensioner handle 30 to open a gap between the tension wheel 46 and the foot 26. A lead or free end F of the strap S is positioned around the load and a supply end P of the strap S (from a strap dispenser) is positioned overlapping the free end F. The overlapping courses of strap S are positioned in the tool 300a between the tension wheel 46 and the foot 26 and between the dies 60 and punch 62 with the supply end P entering from the rear end (the tension wheel 46 end) of the tool 300a as illustrated in Figures 9 and 10, with the strap S courses positioned under the hold-down finger 38.

In one scenario of an automatic mode, depressing and releasing the actuation switch 68 commences the operating cycle. With overlapping strap S courses positioned between the tension wheel 46 and the foot 26 and between the dies 60 and punch 62, the tension cycle starts, as at step 108, in which the tensioner motor 40 operates to drive the tension wheel 46 to draw tension in the strap S. As the tensioner motor 40 operates, the actuation switch LED 84 is illuminated. When the tension in the strap reaches a predetermined tension level (stored in the memory device 314), the tensioner motor 40 stops and the LED indicator 84 goes out.

The sealing cycle then starts, as at step 110, in which the sealing motor 50 operates to rotate the cam shaft 56 and the cams 58 move into contact with and move the dies 60 downward to contact the strap S. When the sealing motor 50 starts, the actuation switch LED 84 illuminates to indicate tool 300a operation. The interlocking keys K are cut by the force of the cams 58 on the dies 60 forcing the dies 60 into the strap S and forcing the strap S against the punch 62. The strap supply P end is cut to separate the looped strap S from the strap supply P.

The sealing motor 50 continues to operate, and when the cam shaft 56 completes one full (360 degree) revolution, the cam switch or sensor 74 is triggered and the sealing motor 50 turns off. The dynamic brake 80 stops the cam shaft 56 at the home position by absorbing excess energy from the sealing motor 50. The hold-down finger 38 at the foot 26 holds the strap S temporarily in place in the tool 300a. Once sealing is complete, the tensioner motor 40 operates in reverse for a short period (less than about 1 second) to allow the tension in the strap S to "pull" the keys K into an interlocking arrangement (see Figure 8), which forms the seal or joint J.

Once the sealing cycle is completed, as at step 112, with the dies 60 returned to the home position and the sealing motor 50 stopped, the LED indicator 84 goes out. The tool 300a is then in the ready/ sleep state.

In automatic mode, depressing and releasing the actuation switch 68 at any time during the tension and/ or sealing cycles (see steps 108 and 110), can, for example, stop the tool 300a, and depressing and holding the actuation switch 68, as at step 114, can operate the tensioner motor 40 in reverse. This functions as an emergency stop of the tool 300a.

The tool 300a can also be operated in manual mode in which, for example, a first depression of the actuation switch 68 commences the tension cycle, and the tensioner motor 40 stops when a predetermined tension is reached. In this example of manual operation, a second depression of the actuation switch 68 may then be required to commence the sealing cycle. The auto-stop functions (for example, depressing and/ or depressing and holding the actuation switch) can again serve to stop the tool 300a and/ or reverse the tensioner motor 10 in manual mode.

With reference to the trigger functions and events referenced in Figure 12, Trigger Function (1) (·) when in Ready mode 106, will begin the tensioning cycle; Trigger Function (2) (-) when in Ready mode 106, will cause the tool to reverse until the trigger is released; and Trigger Function (3) (·) at any time during the tension cycle will stop the motor, where (·) indicates that the trigger is held for less than a specified period of time and (-) indicates that the trigger is held for more than a specified period of time.

(*) Automatic mode- after tensioning tool automatically seals. Manual mode- after tensioning tool waits for a second trigger event to activate sealer motor. (**) Strap size adjusting knob- selects strap width, mode and option to only activate sealer motor.

As noted above, the tool 300a can include an anti-jam feature 78, actuation of which can be incorporated into the strap size adjusting device 76. When the anti-jam feature 78 is selected and the actuation switch 68 is depressed, the tensioner motor 40 operates in reverse to clear any material that may be jammed in the tool 300a, between the tension wheel 46 and the foot 26. The sealing motor 50 will cycle once, also to clear any material that may be jammed in the tool 300a.

The tool 300a as disclosed and described is an electrically powered tool that uses a battery 36; it will however be appreciated that the tool 300a can be configured to operate with a voltage converter (not shown) for example, for use at line voltages (e.g., 120 V to 240 V). In addition, although the tool 300a is described as including a tensioner motor 40 and a sealing motor 50, it is contemplated that a single motor can be used to carry out both the tension and sealing functions with appropriate drives in place.

### 3. Initializing the tool setting management software application

In various embodiments, before a user device can: (1) pair with a tool, (2) enable a user to modify any tool settings of the paired tool, (3) display operating data associated with the paired tool, or (4) display diagnostic information associated with the tool setting management software application itself and/ or the tool, the user device must first download, install, and initialize the tool setting management software application or program. The user device may download and install the tool setting management software application to the memory device of the user device in any of a variety of manners, such as by downloading and installing the tool setting management software application from a software application store or a website or by installing the tool setting management software application via use of a CD, a DVD, a USB memory device, or other computer-readable medium. In other embodiments, the tool setting management software application is a web-based application that is accessible via a website. In these embodiments, the user device need not download and install the tool setting management software application, but can instead visit the website to use the web-based application.

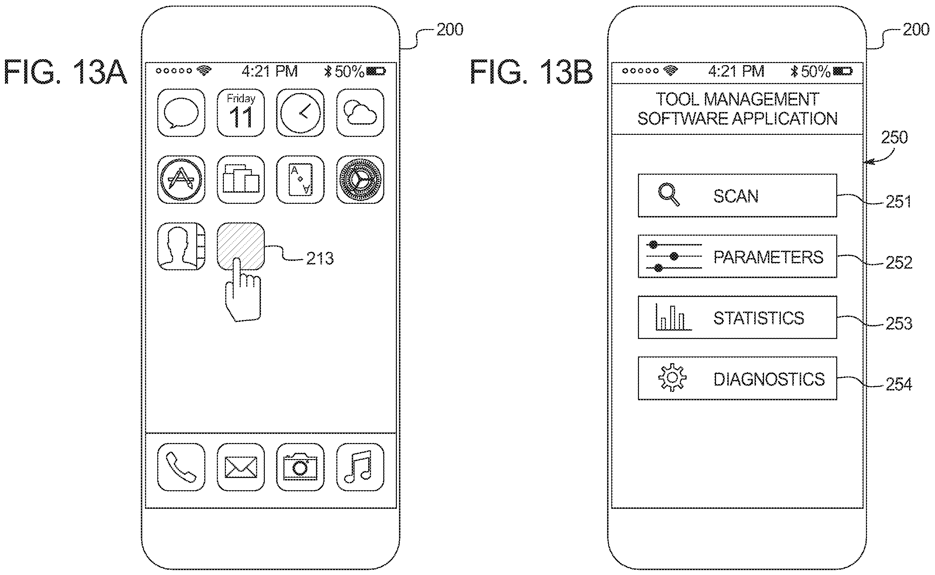

Once the tool setting management software application is installed on the user device, the user may initialize (i.e., instruct the user device to execute) the tool setting management software application in any of a variety of manners known in the art. Figure 13 A is a top plan view of one example embodiment of the user device 200, which is a smartphone in this embodiment, displaying a plurality of icons each associated with a software application installed on the user device 200. The plurality of icons include an icon 213 associated with the tool setting management software application that is selected via a touch screen of the user device to initialize the tool setting management software application.

After the tool setting management software application is initialized, as shown in Figure 13B, the user device 200 displays a Home screen 250 including the following four virtual buttons, which are actuatable via the touch screen of the user device 200: (1) a Scan button 251, (2) a Parameters button 252, (3) a Statistics button 253, and (4) a Diagnostics button 254. The Scan button 251, when actuated, causes the user device to initiate the pairing process to pair the user device with a tool. The Parameters button 252, when actuated, causes the user device to display one or more tool parameters or tool settings of a tool paired with the user device and to enable the user to modify at least one of those tool settings. The Statistics button 253, when actuated, causes the user device to display operating data associated with a tool paired with the user device. The Diagnostics button 254, when actuated, causes the user device to view diagnostic information associated with the tool setting management software application itself and/ or a tool paired with the user device. These functions are described in detail below.

### 4. Pairing a user device and a tool

In various embodiments, before a user device: (1) enables a user of the user device to modify any tool settings of a tool, (2) can display operating data associated with the tool, or (3) can display diagnostic information associated with the tool, the user device and the tool must be paired such that the user device and the tool can transfer data to and receive data from one another.

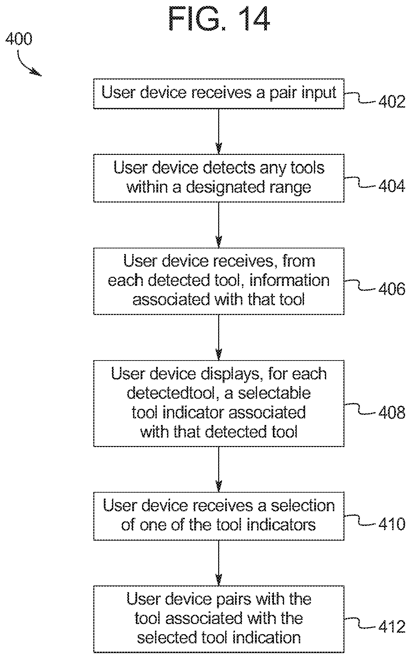

Figure 14 is a flowchart of one example process or method 400 of pairing a user device and a tool. Although the process 400 is described with reference to the flowchart shown in Figure 14, many other processes of performing the acts associated with this illustrated process 400 may be employed. For example, the order of certain of the illustrated blocks may be changed, certain of the illustrated blocks may be optional, and/ or certain of the illustrated blocks may not be employed.

In operation of this embodiment, the user device receives a pair input from the user, as indicated by block 402. The user device detects any tools within a designated range of the user device, as indicated by block 404. The user device receives, from each detected tool, information associated with that tool, as indicated by block 406. The information may include, for example, a name of that tool, a tool type of that tool, a location of that tool, a unique identifier of that tool (such as a serial number), and the like. The user device displays, for each detected tool, a selectable tool indicator associated with that detected tool, as indicated by block 408. The tool indicator may include all of or a subset of the information associated with that tool to help distinguish the detected tools from one another. The user device receives a selection of one of the tool indicators from the user, as indicated by block 410. The user device pairs with the tool associated with the selected tool indicator, as indicated by block 412.

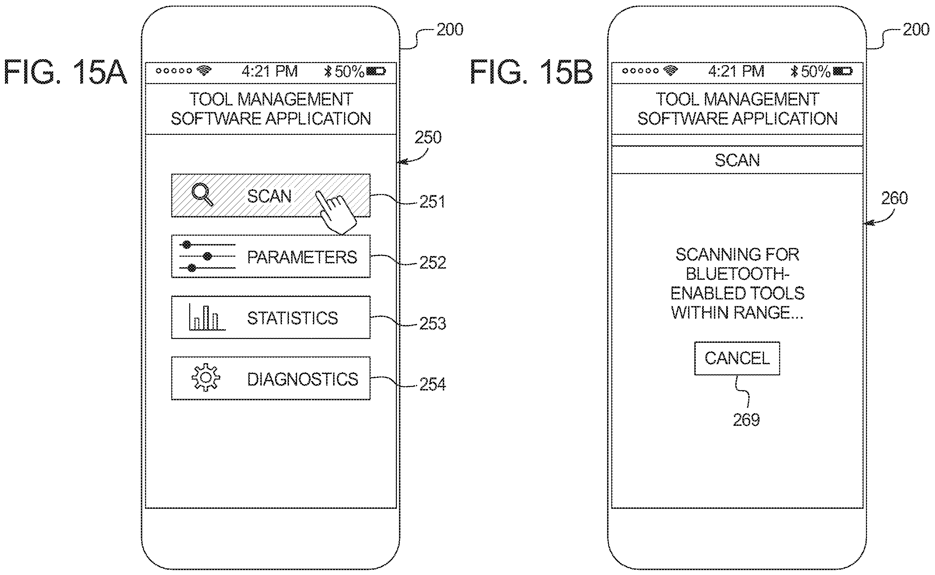

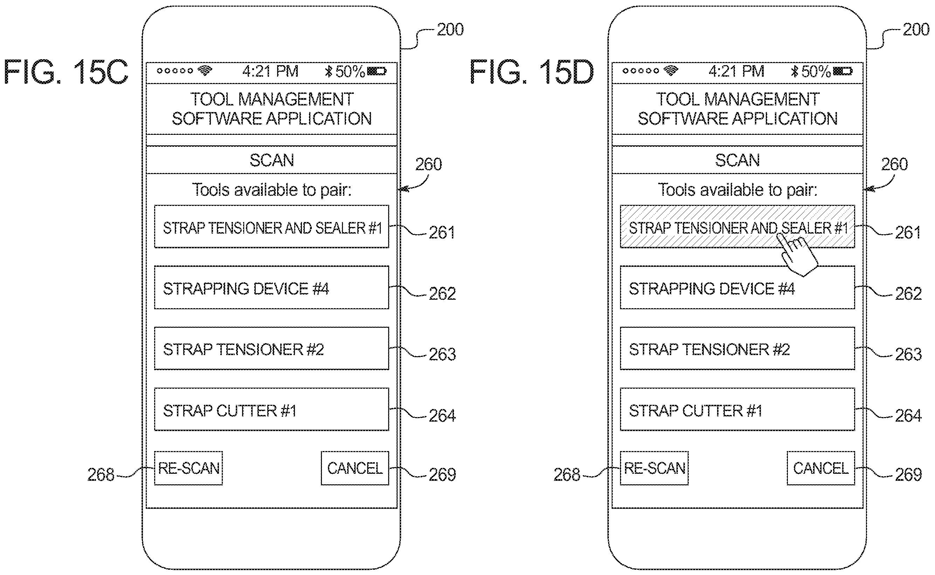

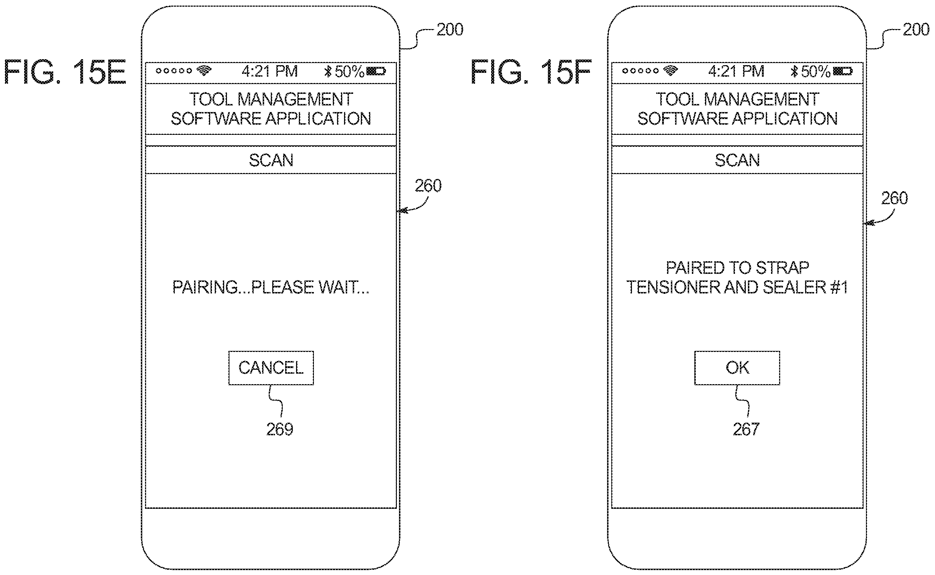

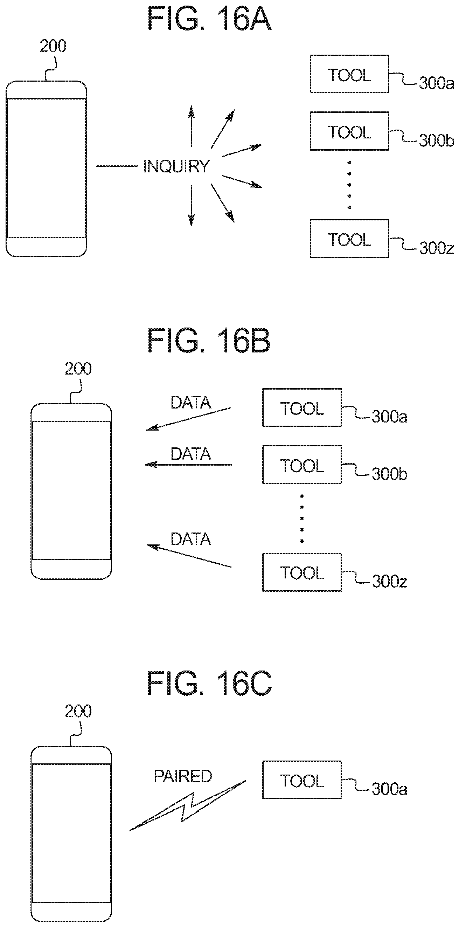

One example embodiment of the process of pairing the user device 200 and one of a plurality of different tools 300a, 300b, ... 300z via a Bluetooth connection is described below with respect to Figures 15A, 15B, 15C, 15D, 15E, 15F, 16A, 16B, and 16C.

Turning to Figure 15A, the user device 200 receives an actuation of the Scan button 251 on the Home screen 250 of the tool setting management software application from the user via the touch screen of the user device 200. This initiates the pairing process.

After receiving the actuation of the Scan button 251, as shown in Figure 16A, the user device 200 broadcasts, via its Bluetooth radio, an inquiry receivable by all Bluetooth-enabled tools 300a, 300b, ... 300z within range of the Bluetooth radio of the user device 200. While doing so, as shown in Figure 15B, the user device 200 displays a Scan screen 260 that includes a Cancel button 269. If the user device 200 receives an actuation of the Cancel button 269, the user devices 200 stops the pairing process and returns to the Home screen 250.

After the Bluetooth radio of a tool 300a, 300b, ... 300z that is "listening" for inquiries broadcast by user devices receives the inquiry from the Bluetooth radio of the user device 200, as shown in Figure 16B, the Bluetooth radio of that tool 300a, 300b, ... 300z sends the user device 200 data representing certain information about that tool 300a, 300b, ... 300z, such as a name of that tool, a tool type of that tool, a location of that tool, a unique identifier of that tool (such as a serial number), and the like. After receiving the data from the Bluetooth-enabled tools 300a, 300b, ... 300z within range, the user device 200 displays, for each of those tools 300a, 300b, ... 300z, a selectable tool indicator associated with that tool. As shown in Figure 15C, the user device 200 displaying a plurality of different tool indicators 261, 262, 263, and 264 on the Scan screen 260. Each tool indicator represents a different one of the Bluetooth-enabled tools 300a, 300b, ... 300z within range of the user device 200 that responded to the inquiry of the user device 200. The user device 200 also displays a Cancel button 269 and a Re-Scan button 268. When the user device 200 receives an actuation of the Cancel button 277, the user device 200 exits the Scan screen 260 and returns to the Home screen 250. When the user device 200 receives an actuation of the Re-Scan button 268, the user device 200 re-starts the pairing process by broadcasting another inquiry as described above.

After displaying the plurality of different tool indicators 261, 262, 263, and 264, the user device 200 enables the user to indicate which tool 300a, 300b, ... 300z (if any) the user desires the user device 200 to pair with by selecting the corresponding displayed tool indicator. As shown in Figure 15D, in this example embodiment the user device 200 receives a selection of the tool indicator 261 from the user via the touch screen of the user device 200.

After receiving the selection of the displayed tool indicator 261, as shown in Figure 16C, the user device 200 securely pairs with the Bluetooth-enabled tool 300a, which is associated with the selected tool indicator 261, in a manner known in the art. Figures 15E and 15F show the Scan screen 260 of the user device 200 while the user device 200 is in the process of pairing with the Bluetooth-enabled tool 300a and after the user device 200 has successfully paired with the Bluetooth-enabled tool 300a, respectively.

While the above-described example embodiment employs a Bluetooth communication network to identify tools within range of the user device and to pair a selected tool with the user device, the tool setting management system may employ any suitable network to do so, such as a WiFi network, a cellular network, and the like.

In certain embodiments, after the user device receives the data from each detected tool within range of the user device, the user device identifies which tool is located the closest to the user device and displays an indication identifying the closest tool. This enables the user to quickly and easily pair a particular tool and the user device by moving the user device close to that tool before initiating the pairing process.

In various embodiments, the tool and the user device include suitable hardware that enables the user device and the tool to pair via NFC. In these embodiments, instead of the user device broadcasting an inquiry to determine tools within range of the user device and the user then searching through a list of within-range tools to select the tool the user desires to pair with the user device, the user simply taps the user device to (or brings the user device within a designated distance of) a particular area of the tool to pair the tool and the user device via NFC.

In certain embodiments, the tool setting management system enables the user to provide unique identifying information associated with a particular tool to enable the tool setting management system to quickly pair the user device with that tool. This saves time by eliminating the need for the user to search through a list of within-range tools to select the tool the user desires to pair with the user device. For instance, in one example embodiment, the user device enables the user to input a unique serial number of a tool, such as by entering the serial number using an alphanumeric keyboard or by using a camera of the user device to take a photo of the serial number. If the tool having this unique serial number responds to the user device's broadcast inquiry, the user device automatically pairs itself with that particular tool.

In another example embodiment, the user device enables the user to take a photo of a unique quick response (QR) code, barcode, or other indicia associated with a particular tool using the camera of the user device. If the tool associated with this unique QR code, barcode, or other indicia responds to the user device's broadcast inquiry, the user device automatically pairs itself with that particular tool. In one embodiment, the user device stores a database that associates unique indicia with their corresponding tools, and in this embodiment the user device uses the database to identify the tool associated with the indicia in the photo. In another embodiment, another device, such as a server, stores this database. In this embodiment, the user device communicates the photo to this other device, such as via a suitable wireless communication network, and the other device determines the corresponding tool and sends this information to the user device.

In various embodiments, the tool may initiate the pairing process instead of the user device. In these embodiments, when the tool receives a pairing input, such as an actuation of a button, the tool broadcasts its request for pairing (via Bluetooth, WiFi, cellular, or any other suitable wireless communication network) to user devices within range. Each user device within range that receives this request then enables the user of the user device to either ignore the request or confirm the request, which initiates pairing of the tool and the user device.

In certain embodiments in which the tool includes a lighting device, the tool illuminates the lighting device in different manners to convey different information associated with the pairing process to the user. For instance, in one example embodiment: (1) the tool illuminates the lighting device in yellow after the tool has responded to the user device's broadcast inquiry and is awaiting pairing instructions, (2) the tool illuminates the lighting device in yellow and in a flashing manner while the user device is in the process of securely pairing with the tool, (3) the tool illuminates the lighting device in green while the tool is securely paired with the user device, and (4) the tool illuminates the lighting device in red and in a flashing manner while the user device is in the process of unpairing from the tool. In another example embodiment, when the user device receives a selection of a displayed tool indicator, the user device causes the corresponding tool to illuminate the lighting device of that tool. This enables the user to quickly and easily visually confirm that the user selected the desired tool indicator to prevent an undesired tool/user device pairing.

In certain embodiments, the tool is configured to "listen" for and respond to an inquiry broadcast by a user device whenever the tool is powered on. For instance, in one embodiment in which the tool is a Bluetooth-enabled battery-powered handheld strap tensioning device, the Bluetooth radio of the strapping tool is configured to "listen" for and respond to an inquiry broadcast by the user device whenever the strap tensioning device is powered on, but not when the strap tensioning device is powered off.

In other embodiments, a tool must be actively configured by a user to "listen" for and respond to inquiries broadcast by a user device through a series of activation steps. For instance, in one example embodiment in which the tool is a Bluetooth-enabled battery-powered handheld strap tensioning device, if the user desires the strap tensioning device to "listen" for and respond to an inquiry broadcast by the user device, the user must first: (1) depress and hold the actuation (i.e., on/off) switch of the strap tensioning device; (2) while depressing the actuation switch, insert the battery into the strap tensioning device; and (3) after inserting the battery, releasing the actuation switch. In this example embodiment, after the user releases the actuation switch, the controller of the strap tensioning device causes the Bluetooth radio to begin "listening" for and responding to any inquiries broadcast by any user devices and illuminates an LED light to indicate that the Bluetooth radio is doing so. The activation steps may be any other suitable activation steps, such as depressing the actuation button for a designated period of time or depressing the actuation button according to a designated sequence.

### 5. Modifying a tool setting of a paired tool

After the user device is paired with a tool, the tool setting management software application enables a user to use the user device to modify one or more tool settings of the paired tool.

More specifically, the memory device of the paired tool stores one or more different tool parameters or tool settings that the tool employs or references during operation of the tool to control certain components of the tool. The tool setting management system of the present disclosure enables a user to modify one or more of these tool settings stored in the memory device of the tool via the tool setting management software application. For example, in one embodiment in which the tool is a strap tensioning device configured to tension a strap, the memory device of the strap tensioning device stores a strap tension level of a strap of a particular width. During operation, the controller of the strap tensioning device controls various components of the strap tensioning device to operate such that the strap tensioning device tensions a strap of that width to the tension level associated with that width stored in the memory device of the strap tensioning device. In this example embodiment, the tool setting management system of the present disclosure enables a user to increase or decrease (i.e., modify) the tension level associated with that strap width stored in the memory device of the tool via the tool setting management software application.

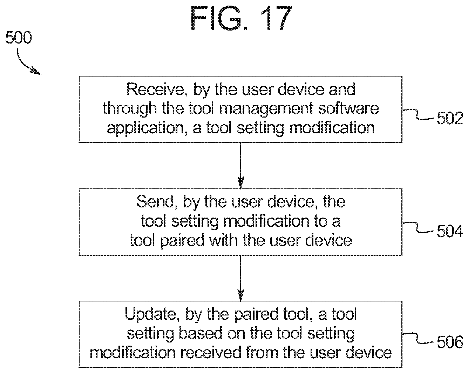

Figure 17 is a flowchart of one example process or method 500 of using a user device to modify a tool setting of a tool paired with the user device. Although the process 500 is described with reference to the flowchart shown in Figure 17, many other processes of performing the acts associated with this illustrated process 500 may be employed. For example, the order of certain of the illustrated blocks may be changed, certain of the illustrated blocks may be optional, and/ or certain of the illustrated blocks may not be employed.

In operation of this embodiment, the user device receives, through the tool setting management software application, a tool setting modification from the user, as indicated by block 502. The user device sends the tool setting modification to the paired tool, as indicated by block 504. The paired tool updates a tool setting based on the tool setting modification received from the user device, as indicated by block 506.

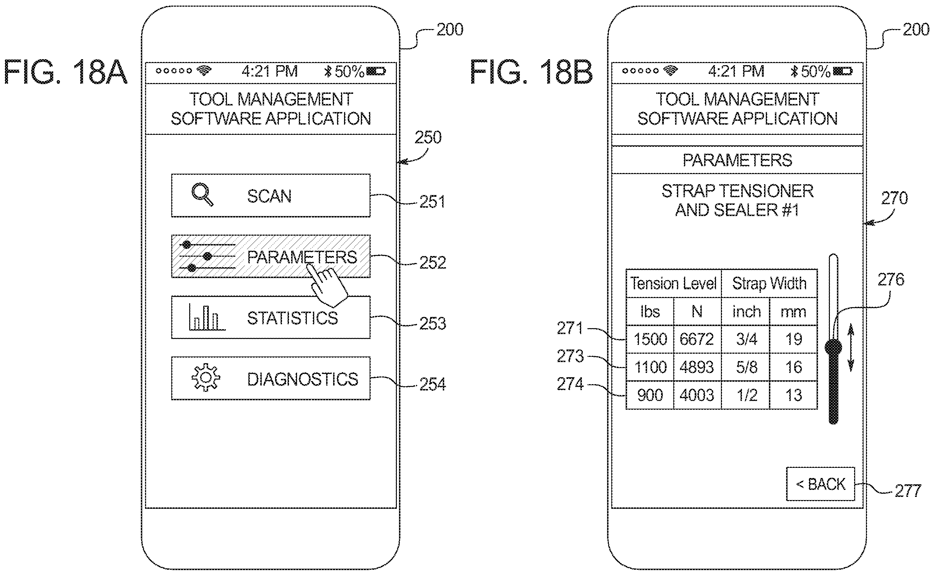

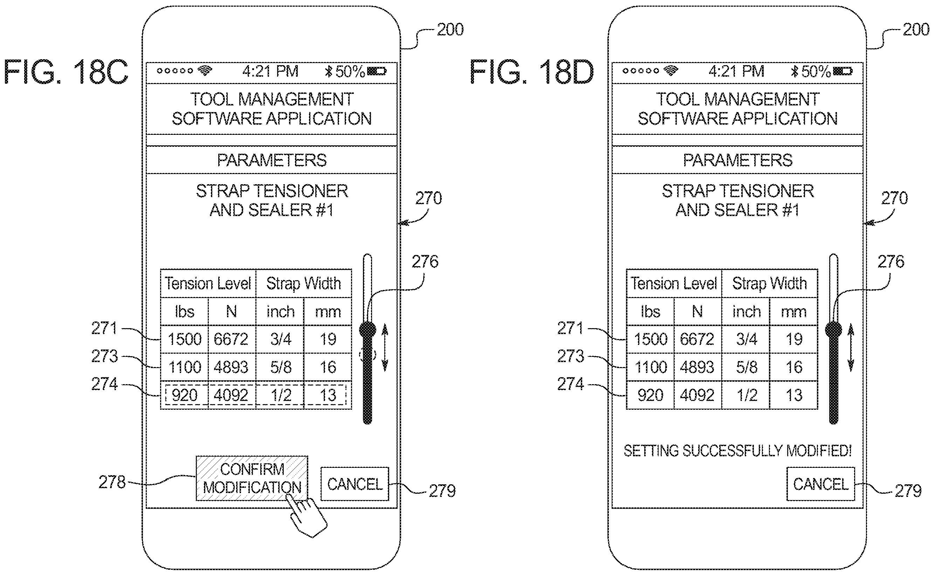

Continuing with the example embodiment described above with respect to Figures 15A, 15B, 15C, 15D, 15E, 15F, 16A, 16B, and 16C, one example embodiment of the process of using the user device 200 to modify a tool setting of the paired tool 300a is described below with respect to Figures 18A, 18B, 18C, and 18D.

Turning to Figure 18A, the user device 200 receives an actuation of the Parameters button 252 on the Home screen 250 of the tool setting management software application from the user via the touch screen of the user device 200.

After receiving the selection of the Parameters button 252, the user device 200 displays a Parameters screen 270, as shown in Figure 18B. The Parameters screen includes a plurality of displayed tool setting indicators 271, 273, and 274 each associated with a different tool parameter or tool setting of the paired tool 300a. Specifically, in this illustrated embodiment in which the paired tool 300a is a steel strap tensioning and sealing tool, each tool setting indicator 271, 273, and 274 is associated with a different tension level setting. Each tension level setting is associated with a particular strap width. For example, here, the tool setting indicator 271 is associated with a tension level of 1500 pounds (6672 Newtons) associated with a strap width of 3/4 inch (19 millimeters), the tool setting indicator 273 is associated with a tension level of 1100 lbs (4893 Newtons) associated with a strap width of 5/8 inch (16 millimeters), and the tool setting indicator 274 is associated with a tension level of 900 pounds (4003 Newtons) associated with a strap width of 1/2 inch (13 millimeters). For a particular strap width, the associated tension level setting indicates the tension to which the tensioning device of the paired tool 300a tensions the steel strap during operation, as described above. For instance, the paired tool 300a will tension a 1/2 inch (13 millimeters) wide strap to 900 pounds (4003 Newtons).

In this example embodiment, the Parameters screen 270 includes a tool setting modification slider 276 usable to modify a selected one of the tension level settings of the paired tool 300a. Specifically, once the user device 200 receives a selection of one of the displayed tool setting indicators 271, 273, and 274, the user device 200 enables the user to manipulate the tool setting modification slider 276 to increase or decrease the tension level setting associated with the selected tool setting indicator. The Parameters screen 270 also includes a Back button 277. When the user device 200 receives an actuation of the Back button 277, the user device 200 exits the Parameters screen 270 and returns to the Home screen 250.

Figure 18C shows the Parameters screen 270 after the user device 200 has received a selection of the tool setting indicator 274 and a manipulation of the tool setting modification slider 276. The Parameters screen 270 indicates that the manipulation of the tool setting modification slider 276 increased the tension level associated with the 1/2 inch (13 millimeters) wide strap width from 900 pounds (4003 Newtons) to 920 pounds (4092 Newtons). In this example embodiment, after one of the tension settings is modified, the user device 200 displays a Confirm Modification button 278 and a Cancel button 279. When the user device 200 receives an actuation of the Confirm Modification button 278, the user device 200 sends the updated tension level setting to the paired tool 300a and, and shown in Figure 18D, displays confirmation that the tension level setting has been modified. When the user device 200 receives an actuation of the Cancel button 279, the user device 200 cancels the pending tool setting modification.

When the paired tool 300a receives the modified tension level setting from the user device 200, the paired tool 300a replaces the tension level setting currently stored in the memory device 314 (i.e., the 900 pound (4003 Newton) tension level associated with the 1/2 inch (13 millimeters) wide strap in this example embodiment) with the modified tension level setting received from the user device 200 (i.e., the 920 pound (4092 Newton) tension level). Here, unless further modified, the tool 300a will now tension a 1/2 inch (13 millimeters) strap to a tension level of 920 pounds (4092 Newtons).

The user device may enable the user to modify a particular tool setting in any suitable manner instead of or in addition to the use of a tool setting modification slider. For instance, in one embodiment, the user device enables the user to modify a tool setting by entering a new value via an alphanumeric or numeric keyboard. In another embodiment, the user device enables the user to modify a tool setting by selecting from one of a plurality of predetermined tool setting options.

In another embodiment, the user device enables the user to modify a tool setting by selecting from one of a plurality of predetermined tool setting options.

In certain embodiments, the user device displays (either automatically or upon receipt of a particular input) one or more recommended tool settings from which the user may select. In these embodiments, when the user selects one of the recommended tool settings, the user device sends the recommended tool setting to the paired tool, and the paired tool

In certain embodiments, the user device enables the user to input default tool settings and configure the user device such that when the user device pairs with a tool associated with default tool settings, the user device automatically instructs the tool to modify its tool settings to match the default tool settings. For instance, a user may desire a particular model of a strap tensioning device to have a tension level setting of 900 pounds (4003 Newtons). The user inputs this default tension level setting to the user device and configures the user device to automatically instruct the user device to, whenever paired with that model strap tensioning device, automatically instruct the strap tensioning device to modify its tension level setting to match the 900 pound (4003 Newton) tension level.

In various embodiments, the tool setting management software application employs one or more security measures to ensure that only authorized users can modify a tool's tool settings via the tool management software application. In one embodiment, the tool setting management software application is password-protected, and only enables users who enter a designated password (or one of a plurality of designated passwords) or other particular unique identifier (e.g., fingerprint, eye scan, face recognition, etc.) to modify a tool setting using the tool setting management software application.

### 6. Displaying operating data and diagnostic information associated with a paired tool

After the user device is paired with a tool, the tool setting management software application enables a user to use the user device to display operating data and diagnostic information associated with the paired tool.

More specifically, as described above, during operation of a tool, the controller of the tool compiles and stores in the memory device of the tool any of a variety of different data associated with tool operation. Once the tool pairs with a user device, the tool sends the stored operating data to the user device, which enables display of the operating data via the tool setting management software application.

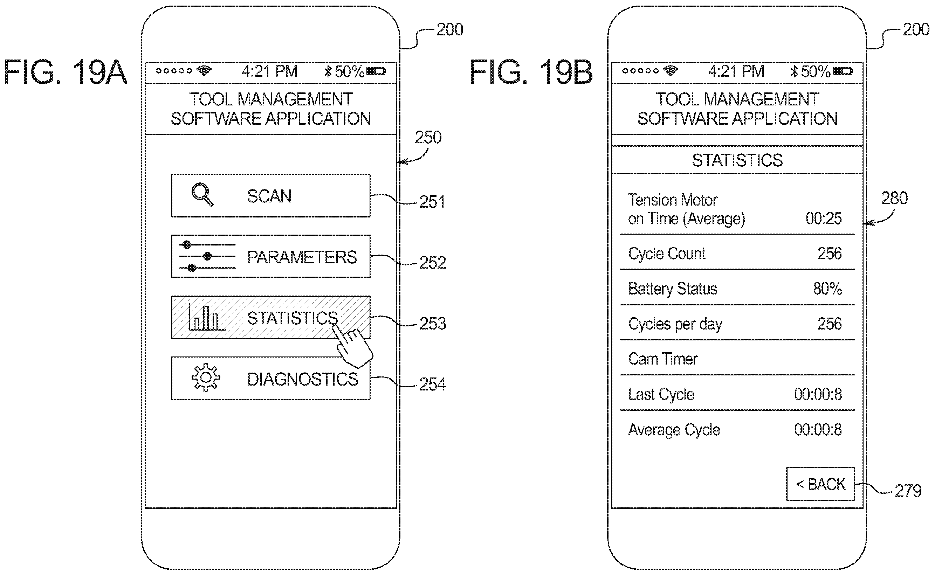

Continuing with the example embodiment described above with respect to Figures 15A, 15B, 15C, 15D, 15E, 15F, 16A, 16B, 16C, 17A, 17B, 17C, and 17D, one example embodiment of the process of using the user device 200 to display operating and diagnostic data associated with the paired tool 300a is described below with respect to Figures 18A, 18B, 19A, and 19B.

Turning to Figure 19A, the user device 200 receives an actuation of the Statistics button 253 on the Home screen 250 of the tool setting management software application from the user via the touch screen of the user device 200.

After receiving the actuation of the Statistics button 253, the user device 200 displays a Statistics screen 280, as shown in Figure 19B. The Statistics screen 280 displays a plurality of operating data associated with and received from the paired tool 300a. For instance, in this example embodiment, the operating data includes: the average operating time of the tensioner motor per cycle, the total quantity of cycles performed by the paired tool 300a, the percentage of power remaining of the battery of the paired tool 300a, the average quantity of cycles performed by the paired tool 300a per day, the total time between cam position switch or sensor pulses for the last cycle, and the average time between cam position or sensor pulses. In certain embodiments, the Statistics screen 280 is read-only in that the tool setting management software application does not enable the user to interact with any of the displayed information aside from viewing that information.

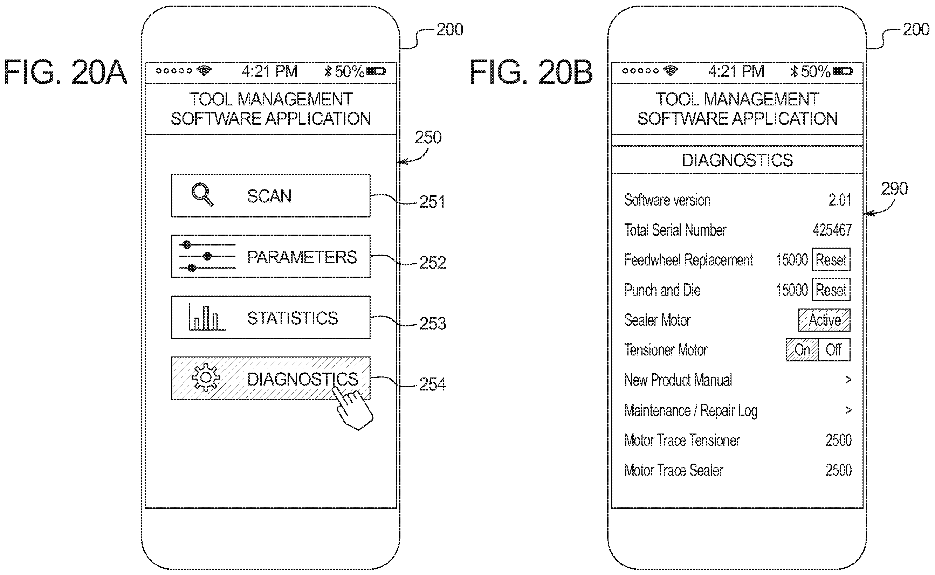

Turning to Figure 20A, the user device 200 receives an actuation of the Diagnostics button 254 on the Home screen 250 of the tool setting management software application from the user via the touch screen of the user device 200.

After receiving the actuation of the Diagnostics button 254, the user device 200 displays a Diagnostics screen 290, as shown in Figure 20B. The Diagnostics screen 290 displays a plurality of diagnostic data associated with and received from the paired tool 300a. For instance, in this example embodiment, the diagnostic data includes: the serial number of the paired tool 300a, the quantity of cycles remaining before the tensioning wheel of the paired tool 300a should be replaced (along with a Reset button that enables the user to reset that quantity to an initial quantity), a quantity of cycles remaining before the punch and die elements of the paired tool 300a should be replaced (along with a Rest button), the status of the sealer and tensioner motors, the total run time of the tensioner motor, and the total run time of the sealer motor.

For certain consumables that require replacement from time to time, such as tensioning wheels or punch and die elements, in certain embodiments the Diagnostics screen 290 displays visual indicators that indicate how "used" a component is and whether the component needs to be replaced. For instance, the Diagnostics screen may display an indicator that changes color from green to yellow to red as a component is used to indicate that the component is becoming "used up" (transitioning from green to yellow) and needs to be replaced (transitioning from yellow to red). Since the user can quickly and easily gauge when the tool will need its components replaced, the user can plan ahead accordingly and order replacement components in advance to minimize downtime when the components in fact need replacement.

The user device may provide an alert (e.g., a visual output, audible output, or tactile output) whenever a component needs replacement. In certain embodiments, the user device is configured to automatically order a replacement component when yellow or red status is reached.

The Diagnostics screen 290 also enables a user to request the instruction manual corresponding to the tool by actuating a particular button, which causes the user device 200 to automatically download the instruction manual or causes the user device 200 to navigate to a web page from which the user device can then download the instruction manual.

The Diagnostics screen 290 also enables a user to view a maintenance log associated with the tool, which indicates the maintenance history of the tool, by actuating a particular button.

The Diagnostics screen 290 also enables a user to export a file (such as a *.csv file or any other suitable file extension) indicative of tensioner motor and/ or sealer motor current as a function of time.

In certain embodiments, if the user device receives an indication from the tool that a particular component of the tool is broken or otherwise malfunctioning, the user device displays an indication that the component is broken and needs to be repaired or replaced. Additionally or alternatively, an indicator of the tool itself could indicate that a particular component of the tool is broken or otherwise malfunctioning, such as by an LED of the tool blinking according to a certain pattern or in a certain color to indicate an error. Different patterns and/ or colors could correspond to different errors. In one embodiment, the user device enables the user to order a replacement component or request a maintenance call via the tool setting management software application.

In various embodiments, the tool stores data associated with the tool itself and/ or operation of the tool in persistent memory, such as a non-volatile memory device of a tool's Bluetooth controller. When the tool is paired with a user device, the controller moves certain stored data into a working memory of the tool, which enables that data to be modified. If modified, changes are copied back into persistent memory.

In certain embodiments, the tool setting management software application employs one or more security measures (such as any of those described above) to control access to the Diagnostics screen.

## Claims

1. A method of modifying a strap tensioning device setting of a strap tensioning device (300), said method comprising:
pairing a user device (200) and the strap tensioning device (300) such that a wireless communication device (240) of the user device (200) and a wireless communication device (340) of the strap tensioning device (300) can communicate with one another over a network (150);
receiving, by an input device (230) of the user device (200), a modification to a strap tensioning device setting of the paired strap tensioning device (300); and
communicating, by the wireless communication device (240) of the user device (200), the modification of the strap tensioning device setting to the wireless communication device (340) of the paired strap tensioning device (300) to cause the paired strap tensioning device (300) to change the strap tensioning device setting in accordance with the modification,
**characterized in that**
the strap tensioning device setting cannot be modified other than via receipt of the modification from the wireless communication device (240) of the user device (200).

2. The method of claim 1, wherein the strap tensioning device setting is a tension level setting.

3. The method of claim 1, which includes receiving, by the wireless communication device (240) of the user device (200) and from the wireless communication device (340) of the paired strap tensioning device (300), strap tensioning device operating data.

4. The method of claim 3, which includes receiving, by the input device (230) of the user device (200), a request to view the strap tensioning device operating data and displaying, by the display device (222) of the user device (200), the strap tensioning device operating data in response to receiving the request.

5. The method of claim 3, which includes communicating, by the wireless communication device (240) of the user device (200) and to the wireless communication device (340) of the paired strap tensioning device (300), a request for the strap tensioning device operating data.

6. A strap tensioning device (300a) comprising:
a body (12);
a battery (36) supported by the body (12);
a tensioning motor (40) supported by the body (12) and powered by the battery (36);
a tensioning wheel (46) operably connected to the tensioning motor (40);
a controller (310) including a memory device (314) storing a strap tensioning device setting associated with a tension level, the controller (310) configured to: (1) control the tensioning motor (40) in accordance with the strap tensioning device setting to tension a strap (S) until a strap tension of the strap (S) reaches the tension level,
**characterized in that** the strap tensioning device (300a) further comprises a first wireless communication device (340) pairable with a second wireless communication device (240) of a user device (200) such that the first wireless communication device (340) can send data to and receive data from the second wireless communication device (240); and
wherein the controller (310) is further configured to: (2) after the first wireless communication device (340) is paired with the second wireless communication device (240) and the first wireless communication device (340) receives a request to modify the tension level of the strap tensioning device setting from the second wireless communication device (240), modify the tension level, wherein the tension level cannot be modified other than via receipt of the request to modify from the second wireless communication device (240).

7. The strap tensioning device of claim 6, which includes a power device (68) actuatable to power the strap tensioning device on and off.

8. The strap tensioning device of claim 7, wherein the strap tensioning device does not include any devices in addition to the power device (68) that are physically manipulatable by a user to modify the tension level.

9. The strap tensioning device of claim 6, wherein the controller (310) is configured to pair the first wireless communication device (340) with the second wireless communication device (240) upon receiving a pair request from the second wireless communication device (240).

10. The strap tensioning device of claim 6, wherein the first and second wireless communication devices (340, 240) are Bluetooth devices.

11. The strap tensioning device of claim 6, wherein the controller (310) is configured to cause the first wireless communication device (340) to send strap tensioning device operating data to the second wireless communication device (240).

12. The strap tensioning device of claim 11, wherein the controller (310) is configured to automatically cause the first wireless communication device (340) to send the strap tensioning device operating data to the second wireless communication device (240) after the first wireless communication device (340) and the second wireless communication device (240) are paired.

13. The strap tensioning device of claim 11, wherein the controller (310) is configured to cause the first wireless communication device (340) to send the strap tensioning device operating data upon receiving a strap tensioning device operating data request from the second wireless communication device (240).

## Patentansprüche

1. Verfahren zum Modifizieren einer Bandspannvorrichtungseinstellung einer Bandspannvorrichtung (300), wobei das Verfahren umfasst:
Koppeln einer Benutzervorrichtung (200) und der Bandspannvorrichtung (300), so dass eine drahtlose Kommunikationsvorrichtung (240) der Benutzervorrichtung (200) und eine drahtlose Kommunikationsvorrichtung (340) der Bandspannvorrichtung (300) über ein Netzwerk (150) miteinander kommunizieren können;
Empfangen einer Modifikation einer Bandspannvorrichtungseinstellung der gekoppelten Bandspannvorrichtung (300) durch eine Eingabevorrichtung (230) der Benutzervorrichtung (200); und
Kommunizieren der Modifikation der Bandspannvorrichtungseinstellung an die drahtlose Kommunikationsvorrichtung (340) der gekoppelten Bandspannvorrichtung (300) durch die drahtlose Kommunikationsvorrichtung (240) der Benutzervorrichtung (200), um zu veranlassen, dass die gekoppelte Bandspannvorrichtung (300) die Bandspannvorrichtungseinstellung gemäß der Modifikation ändert,
**dadurch gekennzeichnet, dass**
die Bandspannvorrichtungseinstellung nicht anders modifiziert werden kann als durch Empfangen der Modifikation von der drahtlosen Kommunikationsvorrichtung (240) der Benutzervorrichtung (200).

2. Verfahren nach Anspruch 1, wobei die Bandspannvorrichtungseinstellung eine Spannungsniveaueinstellung ist.

3. Verfahren nach Anspruch 1, das das Empfangen von Betriebsdaten der Bandspannvorrichtung durch die drahtlose Kommunikationsvorrichtung (240) der Benutzervorrichtung (200) und von der drahtlosen Kommunikationsvorrichtung (340) der gekoppelten Bandspannvorrichtung (300) beinhaltet.

4. Verfahren nach Anspruch 3, das das Empfangen einer Anforderung zum Betrachten der Betriebsdaten der Bandspannvorrichtung durch die Eingabevorrichtung (230) der Benutzervorrichtung (200) und das Anzeigen der Betriebsdaten der Bandspannvorrichtung durch die Anzeigevorrichtung (222) der Benutzervorrichtung (200) als Reaktion auf das Empfangen der Anforderung beinhaltet.

5. Verfahren nach Anspruch 3, das die Kommunikation einer Anforderung für die Betriebsdaten der Bandspannvorrichtung durch die drahtlose Kommunikationsvorrichtung (240) der Benutzervorrichtung (200) und an die drahtlose Kommunikationsvorrichtung (340) der gekoppelten Bandspannvorrichtung (300) beinhaltet.

6. Bandspannvorrichtung (300a), umfassend:
einen Körper (12);
eine Batterie (36), die von dem Körper (12) getragen wird;
einen Spannmotor (40), der von dem Körper (12) getragen und von der Batterie (36) angetrieben wird;
ein Spannrad (46), das betriebsmäßig mit dem Spannmotor (40) verbunden ist;
eine Steuerung (310) mit einer Speichervorrichtung (314), die eine Bandspannvorrichtungseinstellung speichert, die einem Spannungsniveau zugeordnet ist, wobei die Steuerung (310) ausgelegt ist zum: (1) Steuern des Spannmotors (40) in Übereinstimmung mit der Bandspannvorrichtungseinstellung, um ein Band (S) zu spannen, bis eine Bandspannung des Bandes (S) das Spannungsniveau erreicht,
**dadurch gekennzeichnet, dass** die Bandspannvorrichtung (300a) ferner umfasst
eine erste drahtlose Kommunikationsvorrichtung (340), die mit einer zweiten drahtlosen Kommunikationsvorrichtung (240) einer Benutzervorrichtung (200) koppelbar ist, so dass die erste drahtlose Kommunikationsvorrichtung (340) Daten an die zweite drahtlose Kommunikationsvorrichtung (240) senden und Daten von ihr empfangen kann; und
wobei die Steuerung (310) ferner ausgelegt ist zum: (2) nachdem die erste drahtlose Kommunikationsvorrichtung (340) mit der zweiten drahtlosen Kommunikationsvorrichtung (240) gekoppelt ist und die erste drahtlose Kommunikationsvorrichtung (340) eine Anforderung von der zweiten drahtlosen Kommunikationsvorrichtung (240) empfängt, das Spannungsniveau zu modifizieren, Modifizieren des Spannungsniveaus, wobei das Spannungsniveau nicht anders modifiziert werden kann als über den Empfang der Anforderung zum Modifizieren von der zweiten drahtlosen Kommunikationsvorrichtung (240).

7. Bandspannvorrichtung nach Anspruch 6, die eine Energievorrichtung (68) beinhaltet, die betätigbar ist, um die Bandspannvorrichtung ein- und auszuschalten.

8. Bandspannvorrichtung nach Anspruch 7, wobei die Bandspannvorrichtung neben der Energievorrichtung (68) keine weiteren Vorrichtungen beinhaltet, die von einem Benutzer physikalisch manipulierbar sind, um das Spannungsniveau zu modifizieren.

9. Bandspannvorrichtung nach Anspruch 6, wobei die Steuerung (310) zum Koppeln der ersten drahtlosen Kommunikationsvorrichtung (340) mit der zweiten drahtlosen Kommunikationsvorrichtung (240) nach Empfangen einer Kopplungsanforderung von der zweiten drahtlosen Kommunikationsvorrichtung (240) ausgelegt ist.

10. Bandspannvorrichtung nach Anspruch 6, wobei die erste und zweite drahtlose Kommunikationsvorrichtung (340, 240) Bluetooth-Vorrichtungen sind.

11. Bandspannvorrichtung nach Anspruch 6, wobei die Steuerung (310) zum Veranlassen der ersten drahtlosen Kommunikationsvorrichtung (340) ausgelegt ist, Betriebsdaten der Bandspannvorrichtung an die zweite drahtlose Kommunikationsvorrichtung (240) zu senden.

12. Bandspannvorrichtung nach Anspruch 11, wobei die Steuerung (310) zum automatischen Veranlassen der ersten drahtlosen Kommunikationsvorrichtung (340) ausgelegt ist, die Betriebsdaten der Bandspannvorrichtung an die zweite drahtlose Kommunikationsvorrichtung (240) zu senden, nachdem die erste drahtlose Kommunikationsvorrichtung (340) und die zweite drahtlose Kommunikationsvorrichtung (240) gekoppelt worden sind.

13. Bandspannvorrichtung nach Anspruch 11, wobei die Steuerung (310) zum Veranlassen der ersten drahtlosen Kommunikationsvorrichtung (340) ausgelegt ist, die Betriebsdaten der Bandspannvorrichtung nach dem Empfangen einer Betriebsdatenanforderung einer Bandspannvorrichtung von der zweiten drahtlosen Kommunikationsvorrichtung (240) zu senden.

## Revendications

1. Procédé de modification d'un réglage de dispositif de tension de sangle d'un dispositif de tension de sangle (300), ledit procédé comprenant :
l'appariement d'un dispositif utilisateur (200) et du dispositif de tension de sangle (300) de telle sorte qu'un dispositif de communication sans fil (240) du dispositif utilisateur (200) et qu'un dispositif de communication sans fil (340) du dispositif de tension de sangle (300) puissent communiquer l'un avec l'autre sur un réseau (150) ;
la réception, par un dispositif d'entrée (230) du dispositif utilisateur (200), d'une modification d'un réglage de dispositif de tension de sangle du dispositif de tension de sangle apparié (300) ; et
la communication, par le dispositif de communication sans fil (240) du dispositif utilisateur (200), de la modification du réglage de dispositif de tension de sangle au dispositif de communication sans fil (340) du dispositif de tension de sangle apparié (300) pour amener le dispositif de tension de sangle apparié (300) à modifier le réglage de dispositif de tension de sangle en fonction de la modification,
**caractérisé en ce que**
le réglage de dispositif de tension de sangle ne peut pas être modifié autrement que par le biais de la réception de la modification provenant du dispositif de communication sans fil (240) du dispositif utilisateur (200).

2. Procédé selon la revendication 1, dans lequel le réglage de dispositif de tension de sangle est un réglage de niveau de tension.

3. Procédé selon la revendication 1, qui comprend la réception, par le dispositif de communication sans fil (240) du dispositif utilisateur (200) et à partir du dispositif de communication sans fil (340) du dispositif de tension de sangle apparié (300), de données de fonctionnement du dispositif de tension de sangle.

4. Procédé selon la revendication 3, qui comprend la réception, par le dispositif d'entrée (230) du dispositif utilisateur (200), d'une requête pour visualiser les données de fonctionnement du dispositif de tension de sangle et l'affichage, par le dispositif d'affichage (222) du dispositif utilisateur (200), des données de fonctionnement du dispositif de tension de sangle en réponse à la réception de la requête.

5. Procédé selon la revendication 3, qui comprend la communication, par le dispositif de communication sans fil (240) du dispositif utilisateur (200) et vers le dispositif de communication sans fil (340) du dispositif de tension de sangle apparié (300), d'une requête pour les données de fonctionnement du dispositif de tension de sangle.

6. Dispositif de tension de sangle (300a) comprenant :
un corps (12) ;
une batterie (36) supportée par le corps (12) ;
un moteur de tension (40) supporté par le corps (12) et alimenté par la batterie (36) ;
une roue de tension (46) reliée de manière opérationnelle au moteur de tension (40) ;
un dispositif de commande (310) comprenant un dispositif de mémoire (314) stockant un réglage de dispositif de tension de sangle associé à un niveau de tension, le dispositif de commande (310) est configuré pour : (1) commander le moteur de tension (40) en fonction du réglage de dispositif de tension de sangle pour tendre une sangle (S) jusqu'à ce qu'une tension de sangle de la sangle (S) atteigne le niveau de tension,
**caractérisé en ce que** le dispositif de tension de sangle (300a) comprend en outre :
un premier dispositif de communication sans fil (340) pouvant être apparié à un second dispositif de communication sans fil (240) d'un dispositif utilisateur (200) de telle sorte que le premier dispositif de communication sans fil (340) puisse envoyer des données au second dispositif de communication sans fil (240), et recevoir des données en provenance de celui-ci ; et
dans lequel le dispositif de commande (310) est configuré en outre pour: (2) après que le premier dispositif de communication sans fil (340) est apparié au second dispositif de communication sans fil (240) et que le premier dispositif de communication sans fil (340) a reçu une requête de modification du niveau de tension du réglage de dispositif de tension de sangle provenant du second dispositif de communication sans fil (240), modifier le niveau de tension, dans lequel le niveau de tension ne peut pas être modifié autrement que par le biais de la réception de la requête de modification provenant du second dispositif de communication sans fil (240).

7. Dispositif de tension de sangle selon la revendication 6, qui comprend un dispositif d'alimentation (68) pouvant être actionné pour allumer et éteindre le dispositif de tension de sangle.

8. Dispositif de tension de sangle selon la revendication 7, dans lequel le dispositif de tension de sangle ne comprend pas de dispositifs en plus du dispositif d'alimentation (68) pouvant être manipulé physiquement par un utilisateur pour modifier le niveau de tension.

9. Dispositif de tension de sangle selon la revendication 6, dans lequel le dispositif de commande (310) est configuré pour apparier le premier dispositif de communication sans fil (340) au second dispositif de communication sans fil (240) lors de la réception d'une requête d'appariement provenant du second dispositif de communication sans fil (240).

10. Dispositif de tension de sangle selon la revendication 6, dans lequel les premier et second dispositifs de communication sans fil (340, 240) sont des dispositif Bluetooth.

11. Dispositif de tension de sangle selon la revendication 6, dans lequel le dispositif de commande (310) est configuré pour amener le premier dispositif de communication sans fil (340) à envoyer des données de fonctionnement du dispositif de tension de sangle au second dispositif de communication sans fil (240).

12. Dispositif de tension de sangle selon la revendication 11, dans lequel le dispositif de commande (310) est configuré pour amener automatiquement le premier dispositif de communication sans fil (340) à envoyer les données de fonctionnement du dispositif de tension de sangle au second dispositif de communication sans fil (240) après que le premier dispositif de communication sans fil (340) et le second dispositif de communication sans fil (240) sont appariés.

13. Dispositif de tension de sangle selon la revendication 11, dans lequel le contrôleur (310) est configuré pour amener le premier dispositif de communication sans fil (340) à envoyer les données de fonctionnement du dispositif de tension de sangle lors de la réception d'une requête de données de fonctionnement du dispositif de tension de sangle provenant du second dispositif de communication sans fil (240).
